**Europäisches Patentamt**

**European Patent Office**

**Office européen des brevets**

(19)

(11) **EP 1 437 896 A2**

(12) **EUROPEAN PATENT APPLICATION**

| | |
|---|---|
| (43) Date of publication:<br>**14.07.2004 Bulletin 2004/29** | (51) Int Cl.[7]: **H04N 7/26**, H04N 7/50 |

(21) Application number: **03028756.9**

(22) Date of filing: **12.12.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Sheraizin, Vitaly, S.**<br>  **Mazkeret Batya 76804 (IL)**<br>• **Sheraizin, Semion, M.**<br>  **Mazkeret Batya 76804 (IL)** |
| (30) Priority: **07.01.2003 US 337415** | (74) Representative: **VOSSIUS & PARTNER**<br>**Postfach 86 07 67**<br>**81634 München (DE)** |
| (71) Applicant: **VLS Com Ltd.**<br>**Rehovot 76545 (IL)** | |

(54) **Method and apparatus for improving MPEG picture compression**

(57)    A processor adaptively prefilters video frames to be MPEG encoded. The prefilter is controlled by perception parameters extracted from the original input frames, the target bit rate, buffer occupancy and quality of the decoded frames of the MPEG encoder. A scene change detection can be used to further improve the MPEG compression.

FIG.1

**EP 1 437 896 A2**

**Description**

A standard method of video compression, known as MPEG (Motion Picture Expert Group) compression, involves operating on a group of pictures (GOP). The MPEG encoder processes the first frame of the group in full, while processing the remaining members of the group only for the changes between them, the decompressed version of the first frame and of the following frames which the MPEG decoder will produce. The process of calculating the changes involves both determining the differences and predicting the next frame. The difference of the current and predicted frames, as well as motion vectors, are then compressed and transmitted across a communication channel to an MPEG decoder where the frames are regenerated from the transmitted data.

MPEG compression provides good enough video encoding but the quality of the images is often not as high as it could be. Typically, when the bit rate of the communication channel is high, the image quality is sufficient; however, when the bit rate goes down due to noise on the communication channel, the image quality is reduced.

The following articles discuss MPEG compression and the distortion which occurs:

S.H. Hong, S.D.Kim, "Joint Video Coding of MPEG-2 Video Program for Digital Broadcasting Services," IEEE Transactions of Broadcasting, Vol. 44, No. 2, June 1998, pp. 153 - 164; and

C.H. Min, et al., "A New Adaptive Quantization Method to Reduce Blocking Effect," IEE Transactions on Consumer Electronics, Vol. 44, No. 3, Aug. 1998, pp. 768 - 772.

There is provided, in accordance with an embodiment of the present invention, a processor which changes frames of a video stream according to how an MPEG encoder will encode them so that the output of the MPEG encoder has a minimal number of bits but a human eye generally does not detect distortion of the image in the frame.

Moreover, in accordance with an embodiment of the present invention, the processor includes an analysis unit, a controller and a processor. The analysis unit analyzes frames of a video stream for aspects of the images in the frames which affect the quality of compressed image output of the MPEG encoder. The controller generates a set of processing parameters from the output of the analysis unit, from a bit rate of a communication channel and from a video buffer fullness parameter of the MPEG encoder. The processor processes the video stream according to the processing parameters.

Additionally, in accordance with an embodiment of the present invention, the analysis unit includes a perception threshold estimator which generates per-pixel, perceptual parameters generally describing aspects in each frame that affect how the human eye sees the details of the image of the frame.

Further, in accordance with an embodiment of the present invention, the perception threshold estimator includes a detail dimension generator, a brightness indication generator, a motion indication generator, a noise level generator and a threshold generator. The detail dimension generator generates an indication for each pixel (i,j) of the extent to which the pixel is part of a small detail of the image. The brightness indication generator generates an indication for each pixel (i,j) of the comparative brightness level of the pixel as generally perceived by a human eye. The motion indication generator generates an indication for each pixel (i,j) of the comparative motion level of the pixel. The noise level generator generates an indication for each pixel (i,j) of the amount of noise thereat. The threshold generator generates the perceptual thresholds from the indications.

Still further, in accordance with an embodiment of the present invention, the analysis unit includes an image complexity analyzer which generates an indication of the extent of changes of the image compared to an image of a previous frame.

Moreover, in accordance with an embodiment of the present invention, the analysis unit includes a new scene analyzer which generates an indication of the presence of a new scene in the image of a frame. The new scene analyzer may include a histogram difference estimator, a frame difference generator, a scene change location identifier, a new scene identifier and an updater. The histogram difference estimator determines how different a histogram of the intensities of a current frame n is from that of a previous frame m where the current scene began. The frame difference generator generates a difference frame from current frame n and previous frame m. The scene change location identifier receives the output of histogram difference estimator and frame difference generator and determines whether or not a pixel is part of a scene change. The new scene identifier determines, from the output of the histogram difference estimator, whether or not the current frame views a new scene and the updater sets current frame n to be a new previous frame m if current frame n views a new scene.

Additionally, in accordance with an embodiment of the present invention, the new scene analyzer includes a histogram-based unit which determines the amount of information at each pixel and a new scene determiner which determines the presence of a new scene from the amount of information and from a bit rate.

Further, in accordance with an embodiment of the present invention, the analysis unit includes a decompressed image distortion analyzer which determines the amount of distortion in a decompressed version of the current frame, the analyzer receiving an anchor frame from the MPEG encoder.

Moreover, in accordance with an embodiment of the present invention, the processor includes a spatio-temporal processor which includes a noise reducer, an image sharpener and a spatial depth improver. The noise reducer generally reduces noise from texture components of the image using a noise level parameter from the controller. The image sharpener generally sharpens high contrast components of the image using a per-pixel sharpening parameter from the controller, generally based on the state of the MPEG encoder and the spatial depth improver multiplies the intensity of texture components of the image using a parameter based on the state of the MPEG encoder.

Additionally, in accordance with an embodiment of the present invention, the processor includes an entropy processor which generates a new signal to a video data input of an I, P/B switch of the MPEG encoder, wherein the signal emphasizes information in the image which is not present at least in a prediction frame produced by the MPEG encoder.

Further, in accordance with an embodiment of the present invention, the processor includes a prediction processor which generally minimizes changes in small details or low contrast elements of a frame to be provided to a discrete cosine transform (DCT) unit of the MPEG encoder using a per-pixel parameter from the controller.

There is also provided, in accordance with an embodiment of the present invention, an image compression system including an MPEG encoder and a processor which processes frames of a video stream, taking into account how the MPEG encoder operates.

There is also provided, in accordance with an embodiment of the present invention, a perception threshold estimator including a detail dimension generator, a brightness indication generator, a motion indication generator, a noise level generator and a threshold generator.

There is further provided, in accordance with an embodiment of the present invention, a noise reducer for reducing noise in an image. The noise reducer includes a selector, a filter and an adder. The selector separates texture components from the image, producing thereby texture components and non-texture components, the filter generally reduces noise from the texture components and the adder adds the reduced noise texture components to the non-texture components.

There is still further provided, in accordance with an embodiment of the present invention, an image sharpener for sharpening an image. The sharpener includes a selector, a sharpener and an adder. The selector separates high contrast components from the image, producing thereby high contrast components and low contrast components. The sharpener generally sharpens the high contrast components using a per-pixel sharpening parameter generally based on the state of an MPEG encoder and the adder adds the sharpened high contrast components to the low contrast components.

Finally, there is provided, in accordance with an embodiment of the present invention, a spatial depth improver for improving spatial depth of an image. The improver includes a selector, a multiplier and an adder. The selector separates texture components from the image, producing thereby texture components and non-texture components. The multiplier multiplies the intensity of the texture components using a parameter based on the state of an MPEG encoder and the adder adds the multiplied texture components to the non-texture components.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanying drawings in which:

Fig. 1 is a block diagram illustration of an image compression processor, constructed and operative in accordance with an embodiment of the present invention;

Fig. 2 is a block diagram illustration of a prior art MPEG-2 encoder;

Figs. 3A and 3B are block diagram illustrations of a perceptual threshold estimator, useful in the system of Fig. 1;

Fig. 3C is a graphical illustration of the frequency response of high and low pass filters, useful in the system of Fig. 1;

Fig. 4A is a graphical illustration of a response of a visual perception dependent brightness converter, useful in the estimator of Figs. 3A and 3B;

Fig. 4B is a timing diagram illustration of a noise separator and estimator, useful in the estimator of Figs. 3A and 3B;

Fig. 5A is a block diagram illustration of an image complexity analyzer, useful in the system of Fig. 1;

Fig. 5B is a block diagram illustration of a decompressed image distortion analyzer, useful in the system of Fig. 1;

Fig. 6 is a block diagram illustration of a spatio-temporal processor, useful in the system of Fig. 1;

Fig. 7A is a block diagram illustration of a noise reducer, useful in the processor of Fig. 6;

Fig. 7B is a block diagram illustration of an image sharpener, useful in the processor of Fig. 6;

Fig. 7C is a block diagram illustration of a spatial depth improver, useful in the processor of Fig. 6;

Fig. 8 is a block diagram illustration of an entropy processor, useful in the system of Fig. 1;

Figs. 9A and 9B are block diagram illustrations of two alternative prediction processors, useful in the system of Fig. 1;

Fig. 10 is a block diagram illustration of a further image compression processor, constructed and operative in accordance with an alternative embodiment of the present invention;

Fig. 11 is a block diagram illustration of a further image compression processor, constructed and operative in accordance with a further alternative embodiment of the present invention; and

Fig. 12 is a block diagram illustration of a new scene analyzer, useful in the system of Fig. 11.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

In the following detailed description, numerous specific details are set forth in order to provide a thorough understanding of the invention. However, it will be understood by those skilled in the art, that the present invention may be practiced without these specific details. In other instances, well-known methods, procedures and components have not been described in detail so as not to obscure the present invention.

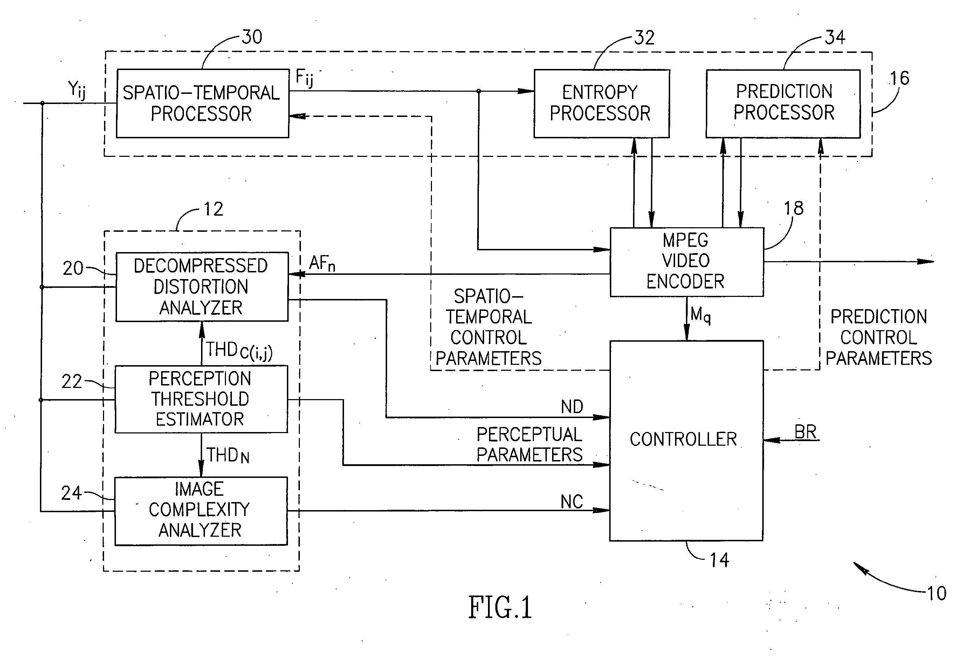

The present invention attempts to analyze each image of the video stream to improve the compression of the MPEG encoder, taking into account at least the current bit rate. Reference is now made to Fig. 1, which is a block diagram illustration of an image compression processor 10, constructed and operative in accordance with a preferred embodiment of the present invention and an MPEG encoder 18.

Processor 10 comprises an analysis block 12, a controller 14 and a processor block 16, the latter of which affects the processing of an MPEG encoder 18. Analysis block 12 analyzes each image for those aspects which affect the quality of the compressed image. Controller 14 generates a set of processing parameters from the analysis of analysis block 12 and from a bit rate BR of the communication channel and a video buffer fullness parameter Mq of MPEG encoder 18.

Analysis block 12 comprises a decompressed distortion analyzer 20, a perception threshold estimator 22 and an image complexity analyzer 24. Decompressed distortion analyzer 20 determines the amount of distortion ND in the decompressed version of the current image.

Perception threshold estimator 22 generates perceptual parameters defining the level of detail in the image under which data may be removed without affecting the visual quality, as perceived by the human eye. Image complexity analyzer 24 generates a value NC indicating the extent to which the image has changed from a previous image.

Controller 14 takes the output of analysis block 12, the bit rate BR and the buffer fullness parameter Mq, and, from them, determines spatio-temporal control parameters and prediction control parameters, described in more detail hereinbelow, used by processor block 16 to process the incoming video stream.

Processor block 16 processes the incoming video stream, reducing or editing out of it those portions which do not need to be transmitted because they increase the fullness of the video buffer of MPEG encoder 18 and therefore, reduce the quality of the decoded video stream. The lower the bit rate, the more drastic the editing. For example, more noise and low contrast details are removed from the video stream if the bit rate is low. Similarly, details which the human eye cannot perceive, given the current bit, rate are reduced or removed.

Processor block 16 comprises a spatio-temporal processor 30, an entropy processor 32 and a prediction processor 34. With spatio-temporal control parameters from controller 14, spatio-temporal processor 30 adaptively reduces noise in an incoming image Y, sharpens the image and enhances picture spatial depth and field of view.

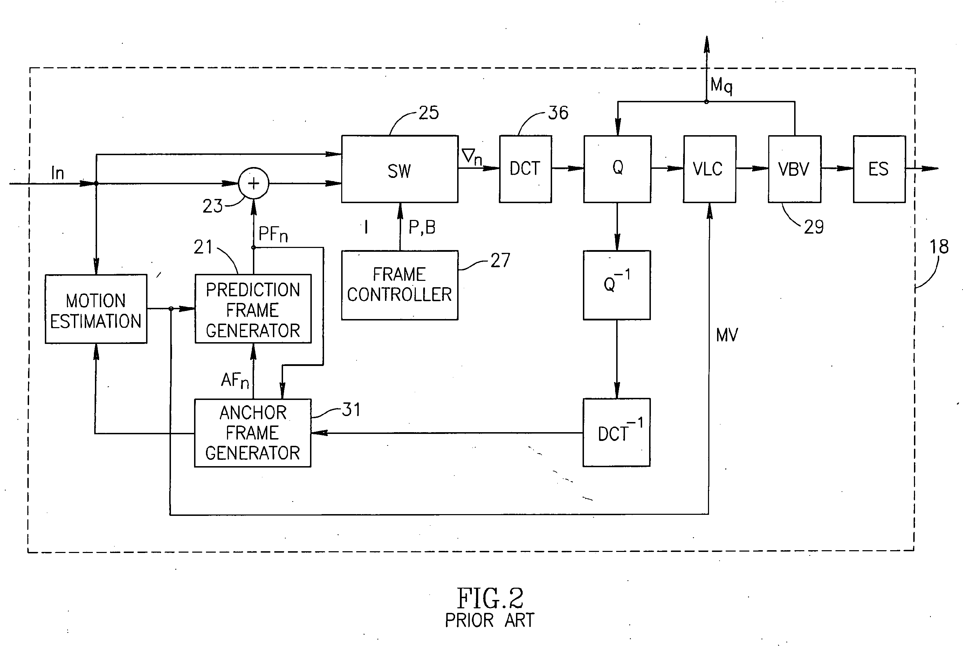

In order to better understand the operations of entropy processor 32 and prediction processor 34, reference is briefly made to Fig. 2, which illustrates the main elements of a standard MPEG-2 encoder, such as encoder 18.

Of interest to the present invention, MPEG-2 encoder comprises a prediction frame generator 21, which produces a prediction frame PFn that is subtracted, in adder 23, from the input video signal IN to the encoder. An I,P/B switch 25 chooses from the input signal and the output of the adder 23 by a frame controller 27. The output of switch 25, a signal $\triangledown_n$, is provided to a discrete cosine transform (DCT) operator 36. A unit video buffer verifier (VBV) 29 produces the video buffer fullness parameter Mq. In a feedback loop, the decompressed frame, known as the "anchor frame" AFn, is generated by anchor frame generator 31.

Entropy processor 32 (Fig. 1) and prediction processor 34 both replace the operations of part of MPEG encoder 18. Entropy processor 32 bypasses adder 23 (Fig. 2) of MPEG encoder 18, receiving prediction frame PFn and providing its output to switch 25. Prediction processor 34 (Fig. 1) replaces the input to DCT 36 (Fig. 2) with its output.

Entropy processor 32 (Fig. 1) attempts to reduce the volume of data produced by MPEG encoder 18 by indicating to MPEG encoder 18 which details are new in the current frame. Using prediction control parameters from controller 14, prediction processor 34 attempts to reduce the prediction error value that MPEG encoder 18 generates and to reduce the intensity level of the signal from switch 25 which is provided to DCT 36. This helps to reduce the number of bits needed to describe the image provided to the DCT 36 and, accordingly, the number of bits to be transmitted.

**Analysis Block**

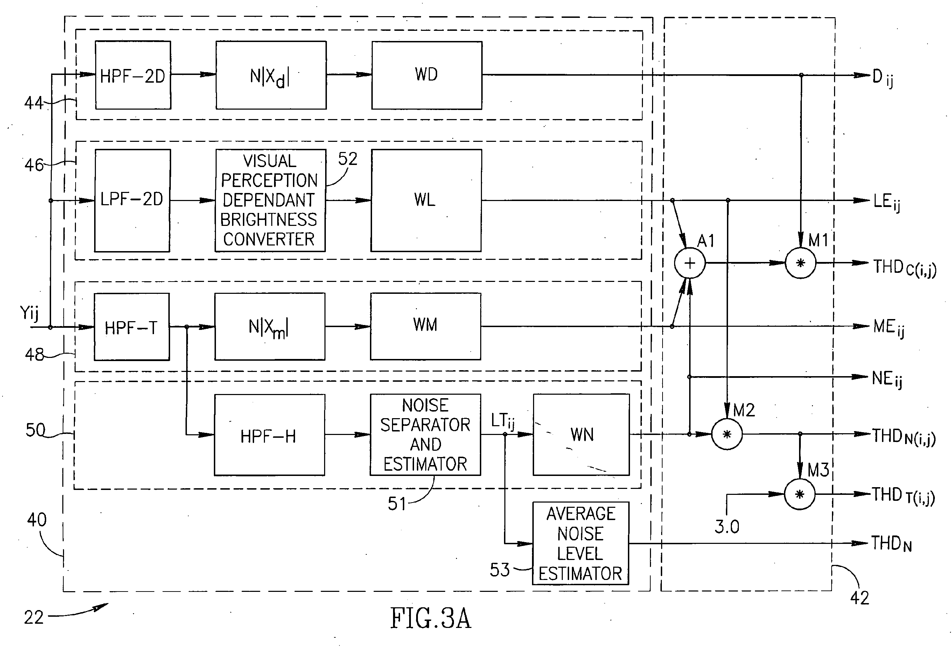

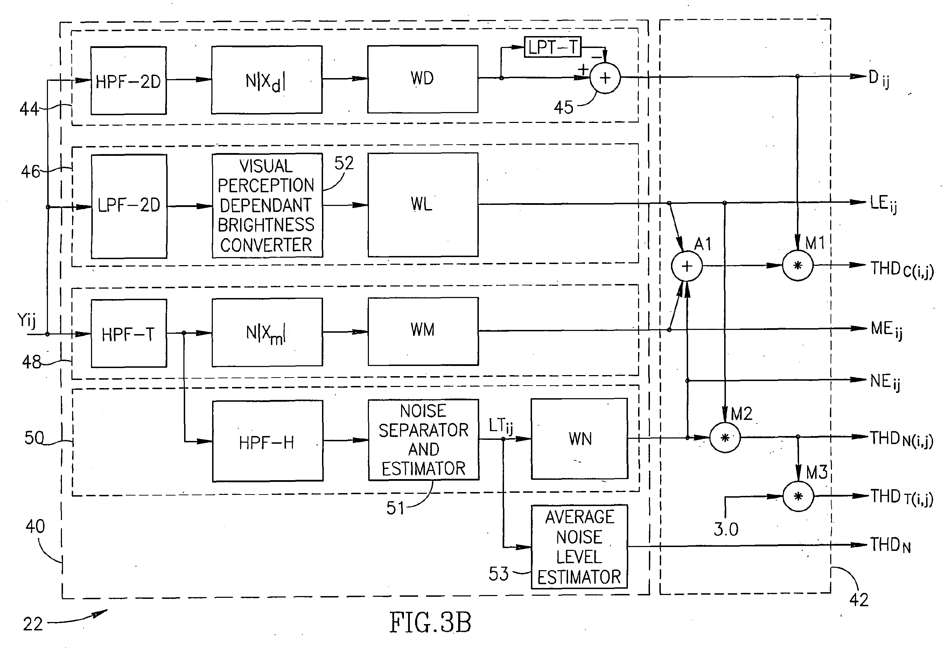

Reference is now made to Figs. 3A and 3B, which illustrate two alternative perception threshold estimators 22, constructed and operative in accordance with a preferred embodiment of the present invention.

Both estimators 22 comprise an image parameter evaluator 40 and a visual perception threshold generator 42. Evaluator 40 comprises four generators that generate parameters used in calculating the visual perception thresholds. The four generators are a detail dimension generator 44, a brightness indication generator 46, a motion indication generator 48 and a noise level generator 50.

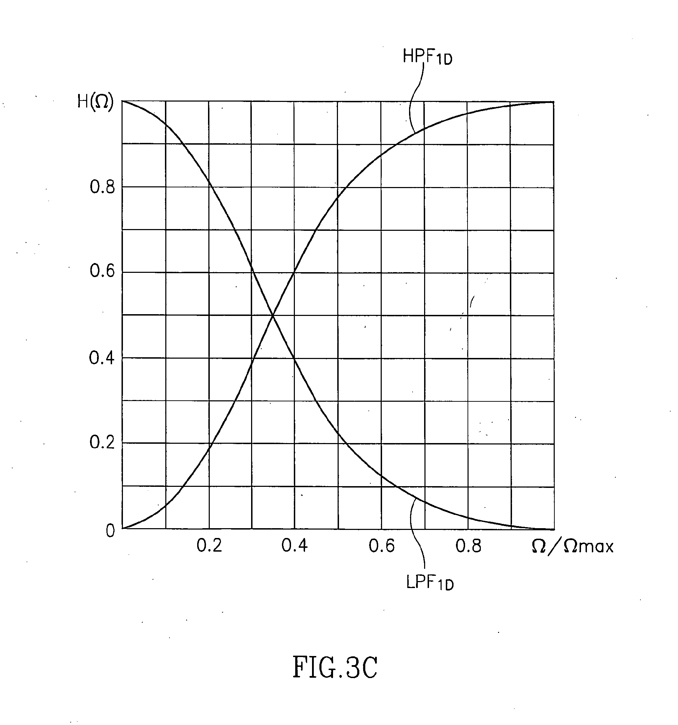

Detail dimension generator 44 receives the incoming video stream $Y_{i,j}$ and produces therefrom a signal $D_{i,j}$ indicating, for each pixel (i,j), the extent to which the pixel is part of a small detail of the image. In Fig. 3A, detail dimension generator 44 comprises, in series, a two-dimensional, high pass filter HPF-2D, a limiter $N|X_d|$ and a weight WD. In Fig. 3B, detail dimension generator 44 also comprises a temporal low pass filter LPF-T and an adder 45. Fig. 3C, to which reference is now briefly made, is a graphical illustration of exemplary high and low pass filters, useful in the present invention. Their cutoff frequencies are set at the expected size of the largest detail.

Returning to Fig. 3A, the intensity level of the high pass filtered signal from high pass filter HPF-2D is a function both of the contrast level and the size of the detail in the original image Y. Limiter $N|X_d|$ limits the signal intensities to those below a given level $X_d$, where $X_d$ is defined by the expected intensity levels of small image details. For example, some statistics indicate that small details in video data have levels of about 30% of the maximum possible intensity level (for example, 256). In this example, $X_d$ is set at an intensity level of 256*0.3 = 80. Weight WD resets the dynamic range of the data to between 0 and 1. Its value corresponds to the limiting level which was used by limiter $N|X_d|$. Thus, if $X_d$ is 80, the weight WD is $N|X_d|/80$.

After high pass filtering, a sharp edge (i.e. a small detail) and a blurred edge (i.e. a wide detail) which have the same contrast level in the original image will have different intensity levels. After limiting by limiter $N|X_d|$, the contrast levels will be the same or much closer and, thus, the signal is a function largely of the size of the detail and not of its contrast level. Weight WD resets the dynamic range of the signal, producing thereby detail dimension signal $D_{i,j}$.

Brightness indication generator 46 receives the incoming video stream $Y_{i,j}$ and produces, therefrom, a signal $LE_{,j}$ indicating, for each pixel (i,j), the comparative brightness level of the pixel within the image. Brightness indication generator 46 comprises, in series, a two-dimensional, low pass filter LPF-2D, a visual perception dependent brightness converter 52 and a weight WL.

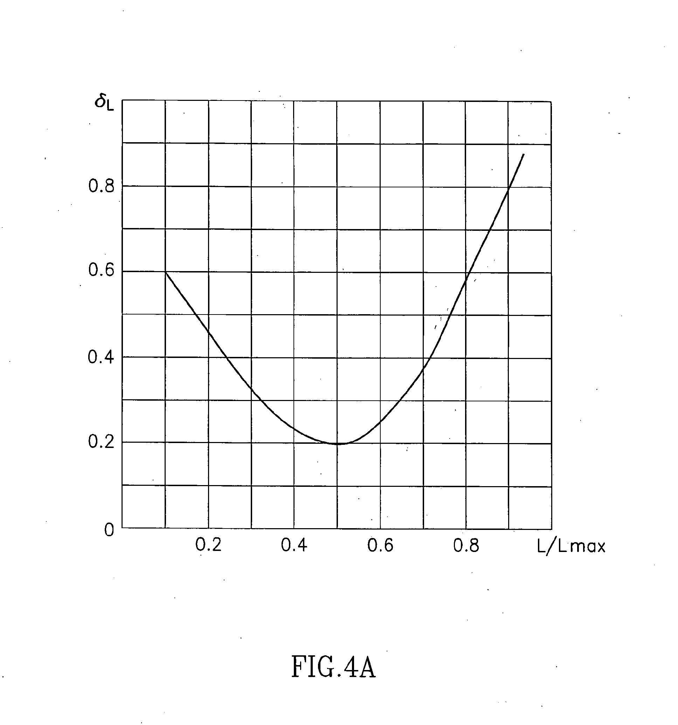

Visual perception dependent brightness converter 52 processes the intensities of the low pass filtered video stream as a function of how the human eye perceives brightness. As is discussed on page 430 of the book, Two-Dimensional Signal and Image Processing by Jae S. Lim, Prentice Hall, NJ, the human eye is more sensitive to light in the middle of the brightness range. Converter 52 imitates this effect by providing higher gains to intensities in the center of the dynamic range of the low pass filtered signal than to the intensities at either end of the dynamic range. Fig. 4A, to which reference is now briefly made, provides a graph of the operation of converter 52. The X-axis is the relative brightness $L/L_{max}$, where $L_{max}$ is the maximum allowable brightness in the signal. The Y-axis provides the relative visual sensitivity $\delta_L$ for the relative brightness level. As can be seen, the visual sensitivity is highest in the midrange of brightness (around 0.3 to 0.7) and lower at both ends.

Referring back to Fig. 3A, the signal from converter 52 is then weighed by weight WL, such as the maximum intensity of the signal $Y_{i,j}$. The result is a signal $LE_{i,j}$ indicating the comparative brightness of each pixel.

Motion indication generator 48 receives the incoming video stream $Y_{i,j}$ and produces therefrom a signal $ME_{i,j}$ indicating, for each pixel (i,j), the comparative motion level of the pixel within the image. Motion indication generator 48 comprises, in series, a temporal, high pass filter HPF-T, a limiter $N|X_m|$ and a weight WM.

Temporal high pass filter HPF-T receives the incoming frame $Y_{i,j}(n)$ and a previous frame $Y_{i,j}(n-1)$ and produces from them a high-passed difference signal. The difference signal is then limited to $X_m$ (e.g. $X_m=0.3X_{max}$) and weighed by WM (e.g. $1/X_m$). The result is a signal $ME_{i,j}$ indicating the comparative motion of each pixel over two consecutive frames.

Noise level generator 50 receives the high-passed difference signal from temporal high pass filter HPF-T and produces therefrom a signal $NE_{i,j}$ indicating, for each pixel (i,j), the amount of noise thereat. Noise level generator 50 comprises, in series, a horizontal, high pass filter HPF-H (i.e. it operates pixel-to-pixel along a line of a frame), a noise separator and estimator 51, a weight WN and an average noise level estimator 53.

High pass filter HPF-H selects the high frequency components of the high-passed difference signal and noise separator and estimator 51 selects only those pixels whose intensity is less than $3\sigma$, where $\sigma$ is the average predicted noise level for the input video signal. The signal $LT_{i,j}$ is then weighted by weight WN, which is generally $1/(3\sigma)$. The result is a signal $NE_{i,j}$ indicating the amount of noise at each pixel.

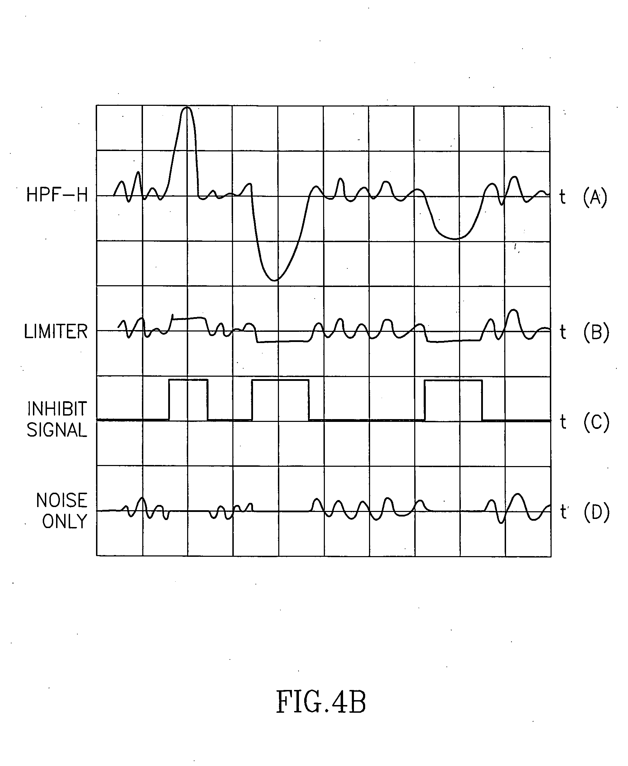

Reference is briefly made to Fig. 4B which illustrates, through four timing diagrams, the operations of noise separator and estimator 51. The first timing diagram, labeled (A), shows the output signal from horizontal high pass filter HPF-H. The signal has areas of strong intensity (where a detail of the image is present) and areas of relatively low intensities. The latter are areas of noise. Graph (B) graphs the signal of diagram (A) after pixels whose intensity is greater than $3\sigma$ have been limited to the $3\sigma$ value. Graph (C) graphs an inhibit signal operative to remove those pixels with intensities of $3\sigma$. Graph (D) graphs the resultant signal having only those pixels whose intensities are below 3σ.

Returning to Figs. 3A and 3B, average noise level estimator 53 averages signal $LT_{i,j}$ from noise separator and estimator 51 over the whole frame and over many frames, such as 100 frames or more, to produce an average level of noise $THD_N$ in the input video data.

Visual perception threshold generator 42 produces four visual perception thresholds and comprises an adder A1, three multipliers M1, M2 and M3 and an average noise level estimator 53. Adder A1 sums comparative brightness signal $LE_{i,j}$, comparative motion signal $ME_{i,j}$ and noise level signal $NE_{i,j}$. This signal is then multiplied by the detail dimension signal $D_{i,j}$, in multiplier M1, to produce detail visual perception threshold $THD_{C(i,j)}$ as follows:

$$THD_{C(i,j)} = D_{i,j} \ (LE_{i,j} + ME_{i,j} + NE_{i,j}) \qquad \text{Equation 1}$$

With multiplier M2, generator 42 produces a noise visibility threshold $THD_{N(i,j)}$ as a function of noise level signal $NE_{i,j}$ and comparative brightness level $LE_{i,j}$ as follows:

$$THD_{N(i,j)} = LE_{i,j} * NE_{i,j} \qquad \text{Equation 2}$$

With multiplier M3, generator 42 produces a low contrast detail detection threshold $THD_{T(i,j)}$ as a function of noise visibility threshold $THD_{N(i,j)}$ as follows:

$$THD_{T(i,j)} = 3 * (THD_{N(i,j)}) \qquad \text{Equation 3}$$

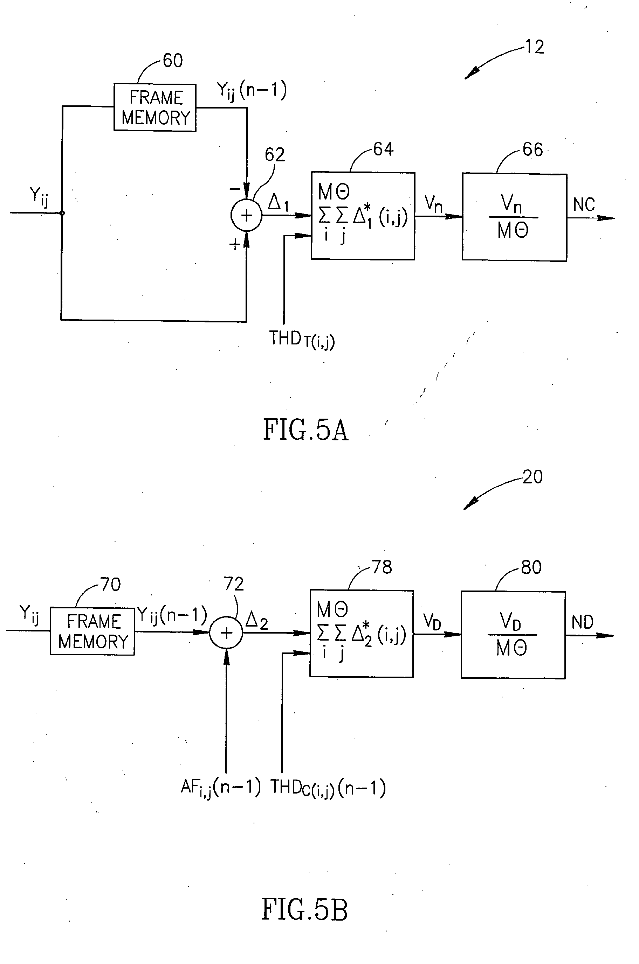

Reference is now made to Fig. 5A, which details, in block diagram form, the elements of image complexity analyzer 24. Analyzer 24 comprises a frame memory 60, an adder 62, a processor 64 and a normalizer 66 and is operative to determine the volume of changes between the current image $Y_{i,j}(n)$ and the previous image $Y_{i,j}(n-1)$.

Adder 62 generates a difference frame $\Delta_1$ between current image $Y_{i,j}(n)$ and previous image $Y_{i,j}(n-1)$. Processor 64 sums the number of pixels in difference frame $\Delta_1$ whose differences are due to differences in the content of the image (i.e. whose intensity levels are over noise visibility threshold $THD_{T(i,j)}$). Mathematically, processor 64 performs the following equations:

$$Vn = \sum_{i}^{M} \sum_{j}^{\Theta} \Delta_1^*(i,j) \qquad \text{Equation 4}$$

where

$$\Delta_1^*(i,j) = \begin{cases} 1 & if \ |\Delta_1| \geq THD_{T(i,j)} \\ 0 & f \ |\Delta_1| < THD_{T(i,j)} \end{cases} \qquad \text{Equation 5}$$

and M and $\Theta$ are the maximum number of lines and columns, respectively, of the frame. For NTSC video signals, M=480 and $\Theta$=720.

Normalizer 66 normalizes Vn, the output of processor 64, by dividing it by $M\Theta$ and the result is the volume NC of picture complexity.

Reference is now made to Fig. 5B, which details, in block diagram form, the elements of decompressed image distortion analyzer 20. Analyzer 20 comprises a frame memory 70, an adder 72, a processor 78 and a normalizer 80 and is operative to determine the amount of distortion ND in the decompressed version of the previous frame (i.e. in anchor frame $AFn_{i,j}(n-1)$).

Frame memory 70 delays the signal, thereby producing previous image $Y_{i,j}(n-1)$. Adder 72 generates a difference frame $\Delta_2$ between previous image $Y_{i,j}(n-1)$ and anchor frame $AFn_{i,j}(n-1)$. Processor 78 sums the number of pixels in difference frame $\Delta_2$ whose differences are due to significant differences in the content of the two images (i.e.

whose intensity levels are over the relevant detail visual perception threshold $THD_{C(i,j)}(n-1)$ for that pixel (i,j)). Mathematically, processor 78 performs the following equations:

$$V_D = \sum_i^M \sum_j^\Theta \Delta_2^*(i,j) \qquad \text{Equation 6}$$

where

$$\Delta_1^*(i,j) = \begin{cases} 1 & if\ |\Delta_1(i,j)| \geq THD_{C(i,j)}(n-1) \\ 0 & f\ |\Delta_1(i,j)| < THD_{C(i,j)}(n-1) \end{cases} \qquad \text{Equation 7}$$

Normalizer 80 normalizes $V_D$, the output of processor 78, by dividing it by $M\Theta$ and the result is the amount ND of decompression distortion.

**Controller**

As mentioned hereinabove, controller 14 produces spatio-temporal control parameters and prediction control parameters from the visual perception parameters, the amount ND of decompressed picture distortion and the volume NC of frame complexity in the current frame. The spatio-temporal control parameters are generated as follows:

$$f_{N.1} = 3 * THD_N \qquad\qquad \text{Equation 8}$$

$$f_{NR(i,j)} = (1 - D_{i,j})NE_{i,j}(LE_{i,j} + ME_{i,j}) \qquad\qquad \text{Equation 9}$$

$$f_{N.2} = 3*\sigma \qquad\qquad \text{Equation 10}$$

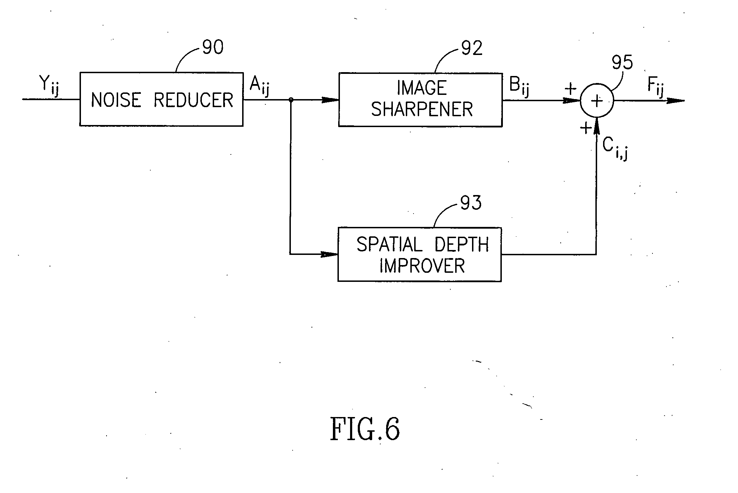

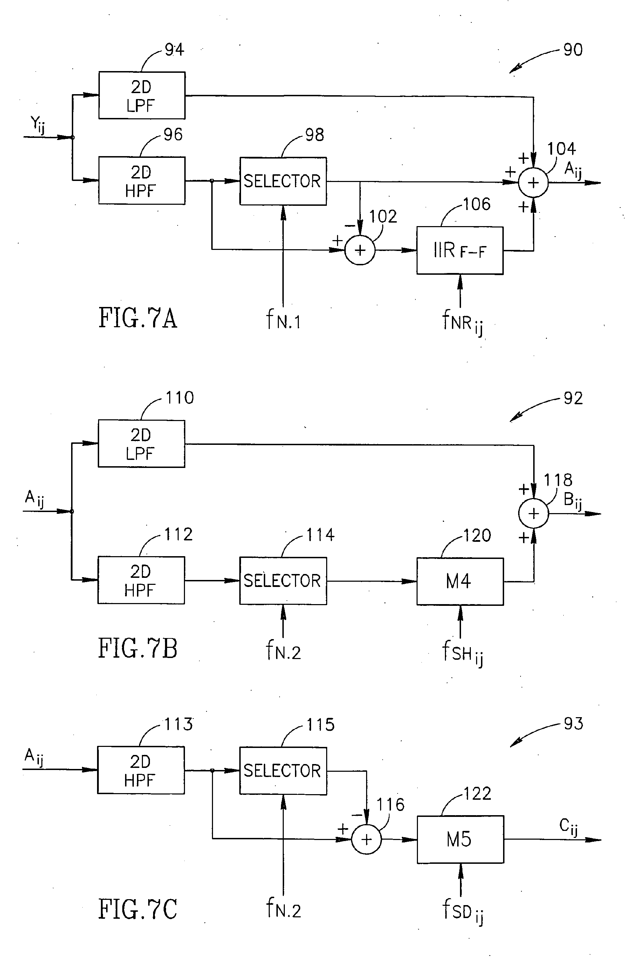

where $\sigma$ is the expected average noise level of video data after noise reduction (see Figs. 6 and 7A). For this, a noise reduction efficiency NR is expected to be 6dB and $\sigma$ is set as:

$$\sigma = THD_N / NR \qquad\qquad \text{Equation 11}$$

The remaining spatio-temporal control parameters are:

$$f_{SH(i,j)} = D_{i,j};(1 - NE_{i,j})(LE_{i,j} + ME_{i,j})(1 - NC - ND) \qquad\qquad \text{Equation 12}$$

$$f_{SD(i,j)} = (1 - D_{i,j})(1 - NE_{i,j})LE_{i,j}(1 - ME_{i,j})(1 - NC) \qquad\qquad \text{Equation 13}$$

The prediction control parameters are generated as follows:

$$M_{q0} = f(BR) \qquad\qquad \text{Equation 14}$$

$$f_{PL.1(i,j)} = K\left[THD_{C(i,j)}\right]_{lim.1}\left[\frac{Mq_{n-1}}{M_{q0}}\right]_{lim.2} \qquad \text{Equation 15}$$

$$f_{PL..2(i,j)} = MK\left[THD_{C(i,j)}\right]_{lim.1}\left[\frac{Mq_{n-1}}{M_{q0}}\right]_{lim.2} \qquad \text{Equation 16}$$

where M and K are scaling coefficient, $Mq_{n-1}$ is the buffer fullness parameter for the previous frame, n-1, and the limits lim.1 and lim.2 are the maximum allowable values for the items in brackets. The values are limited to ensure that recursion coefficients $f_{PL.1(i,j)}$ and $f_{PL.2(i,j)}$ are never greater than 0.95. The $M_{q0}$ value is the average value of Mq for the current bit rate BR, which ensures undistorted video compression. The following table provides an exemplary calculation of $M_{q0}$:

| BR (MBps) | $M_{q0}$ (grey levels) |
|---|---|
| 3 | 10 |
| 4 | 8 |
| 8 | 3 |
| 15 | 2 |

The $M_{q0}$ value is a function of the average video complexity and a given bit rate. If bit rate BR is high, then the video buffer VBV (Fig. 2) is emptied quickly and there is plenty of room for new data. Thus, there is little need for extra compression. On the other hand, if bit rate BR is low, then bits need to be thrown away in order to add a new frame into an already fairly full video buffer.

**Processing Block**

As a reminder from Fig. 1, processor block 16 comprises spatio-temporal processor 30, entropy processor 32 and prediction processor 34. The following details the elements of these three processors.

Reference is now made to Fig. 6, which illustrates the elements of spatio-temporal processor 30. Processor 30 comprises a noise reducer 90, an image sharpener 92, a spatial depth improver 93 in parallel with image sharpener 92 and an adder 95 which adds together the output of image sharpener and spatial depth improver 93 to produce an improved image signal $F_{i,j}$. Reference is also made to Figs. 7A, 7B and 7C which, respectively, illustrate the details of noise reducer 90, image sharpener 92 and improver 93.

Noise reducer 90 comprises a two-dimensional low pass filter 94, a two-dimensional high pass filter 96, a selector 98, two adders 102 and 104 and an infinite impulse response (IIR) filter 106. Filters 94 and 96 receive the incoming video stream $Y_{i,j}$ and generate therefrom low frequency and high frequency component signals. Selector 98 selects those components of the high frequency component signal which have an intensity higher than threshold level $f_{N.1}$ which, as can be seen from Equation 8, depends on the noise level $THD_N$ of incoming video stream $Y_{i,j}$.

Adder 102 subtracts the high intensity signal from the high frequency component signal, producing a signal whose components are below threshold $f_{N.1}$. This low intensity signal generally has the "texture components" of the image; however, this signal generally also includes picture noise. IIR filter 106 smoothes the noise components, utilizing per-pixel recursion coefficient $f_{NR(i,j)}$ (equation 9).

Adder 104 adds together the high intensity signal (output of selector 92), the low frequency component (output of low pass filter 94) and the smoothed texture components (output of IIR filter 106) to produce a noise reduced signal $A_{i,j}$.

Image sharpener 92 (Fig. 7B) comprises a two-dimensional low pass filter 110, a two-dimensional high pass filter 112, a selector 114, an adder 118 and a multiplier 120 and operates on noise reduced signal $A_{i,j}$. Image sharpener 92 divides the noise reduced signal $A_{i,j}$ into its low and high frequency components using filters 110 and 112, respectively. As in noise reducer 90, selector 114 selects the high contrast component of the high frequency component signal. The threshold level for selector 114, $f_{N.2}$, is set by controller 14 and is a function of the reduced noise level σ (see equation 10).

Multiplier 120 multiplies each pixel (i,j) of the high contrast components by sharpening value $f_{SH(i,j)}$, produced by controller 14 (see equation 12), which defines the extent of sharpening in the image. Adder 118 sums the low frequency components (from low pass filter 110) and the sharpened high contrast components (from multiplier 120) to produce a sharper image signal $B_{i,j}$.

Spatial depth improver 93 (Fig. 7C) comprises a two-dimensional high pass filter 113, a selector 115, an adder 116 and a multiplier 122 and operates on noise reduced signal $A_{i,j}$. Improver 93 generates the high frequency component of noise reduced signal $A_{i,j}$ using filter 113. As in noise reducer 90, selector 115 and adder 116 together divide the high frequency component signal into its high contrast and low contrast (i.e. texture) components. The threshold level for selector 115 is the same as that for selector 114 (i.e. $f_{N.2}$).

Multiplier 122 multiplies the intensity of each pixel (ij) of the texture components by value $f_{SD(i,j)}$, produced by controller 14 (see equation 13), which controls the texture contrast which, in turn, defines the depth perception and field of view of the image. The output of multiplier 122 is a signal $C_{i,j}$ which, in adder 95 of Fig. 6, is added to the output $B_{i,j}$ of image sharpener 92.

As can be seen in Fig. 1, improved image signal $F_{i,j}$ is provided both to MPEG encoder 18 and to entropy processor 32. Entropy processor 32 may provide its output directly to DCT 36 (Fig. 2) or to prediction processor 34.

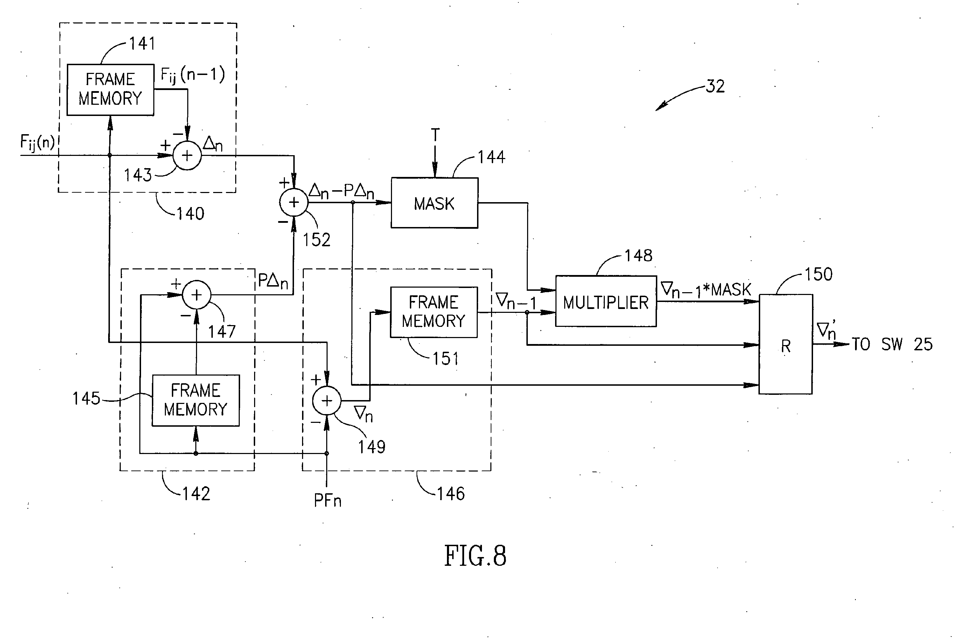

Reference is now made to Fig. 8, which illustrates entropy processor 32 and shows that processor 32 receives prediction frame PFn from MPEG encoder 18 and produces an alternative video input to switch 25, the signal $\nabla_n$, in which new information in the image, which is not present in the prediction frame, is emphasized. This reduces the overall intensity of the parts of the previous frame that have changed in the current frame.

Entropy processor 32 comprises an input signal difference frame generator 140, a prediction frame difference generator 142, a mask generator 144, a prediction error delay unit 146, a multiplier 148 and an R operator 150.

Input signal difference frame generator 140 generates an input difference frame $\Delta n$ between the current frame (frame F(n)) and the previous input frame (frame F(n-1)), using a frame memory 141 and an adder 143 which subtracts the output of frame memory 141 from the input signal $F_{i,j}(n)$. Prediction frame difference generator 142 comprises a frame memory 145 and an adder 147 and operates similarly to input signal difference frame generator 140 but on prediction frame PFn, producing a prediction difference frame $p\Delta n$.

Prediction error delay unit 146 comprises an adder 149 and a frame memory 151. Adder 149 generates a prediction error $\nabla_n$ between prediction frame PFn and input frame F(n). Frame memory 151 delays prediction error $V_n$, producing the delayed prediction error $\nabla_{n-1}$.

Adder 152 subtracts prediction difference frame $p\Delta n$ from difference frame $\Delta n$, producing prediction error difference $\Delta n - p\Delta n$, and the latter is utilized by mask generator 144 to generate a mask indicating, where prediction error difference $\Delta n - p\Delta n$ is smaller than a threshold T, such as, for example, below a grey level of two percentages. In other words, the mask indicates where the prediction frame PFn does not successfully predict what is in the input frame.

Multiplier 148 applies the mask to delayed prediction error $\nabla_{n-1}$, thereby selecting the portions of delayed prediction error $\nabla_{n-1}$ which are not predicted in the prediction frame.

Operator R sums the non-predicted portions, as produced by multiplier 148, the delayed prediction error $\nabla_{n-1}$ and the prediction error difference $\Delta n - p\Delta n$ and produces a new prediction error signal $\nabla_n'$ for switch 25, as follows:

$$\nabla_n' = (\Delta n - P\Delta n) + \nabla_{n-1} - (\nabla_{n-1} \cap MASK) \qquad \text{Equation 17}$$

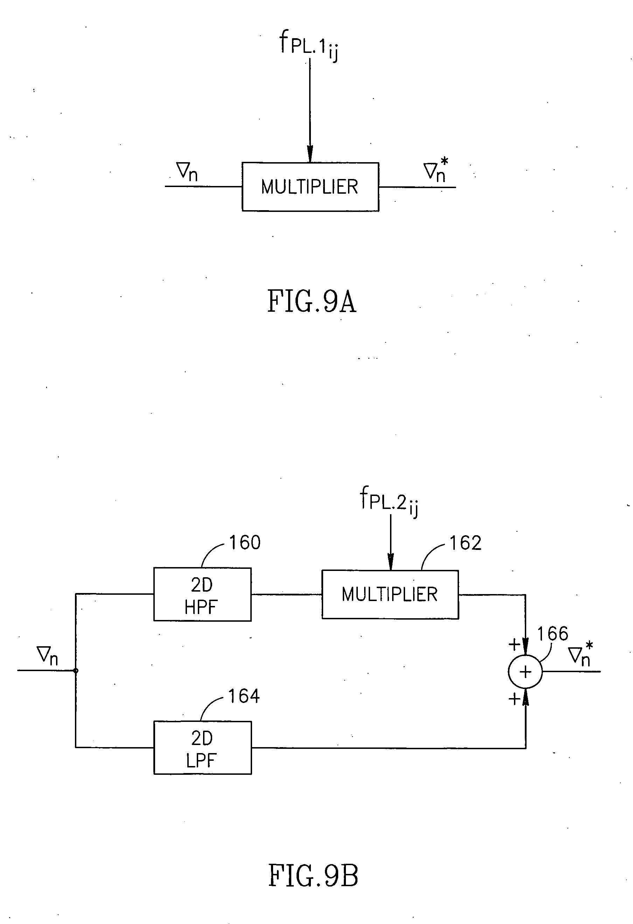

Reference is now made to Figs. 9A and 9B, which illustrate two alternative embodiments of prediction processor 34. For both embodiments, prediction processor 34 attempts to minimize the changes in small details or low contrast elements in the image $\nabla_n$ going to DCT 36. Neither type of element is sufficiently noticed by the human eye to waste compression bits on them.

For the embodiment of Fig. 9A, each pixel of the incoming image is multiplied by per pixel factor $f_{PL.1(i,j)}$, produced by controller 14 (equation 15). For the embodiment of Fig. 9B, only the high frequency components of the image are multiplied by per pixel factor $f_{PL.2(i,j)}$, produced by controller 14 (equation 16). The latter comprises a high pass filter 160, to generate the high frequency components, a multiplier 162, to multiply the high frequency component output of high pass filter 160, a low pass filter 164 and an adder 166, to add the low frequency component output of low pass filter 164 with the de-emphasized output of multiplier 162. Both embodiments of Fig. 9 produce an output signal $\nabla_n$ that is provided to DCT 36.

## Second Embodiment

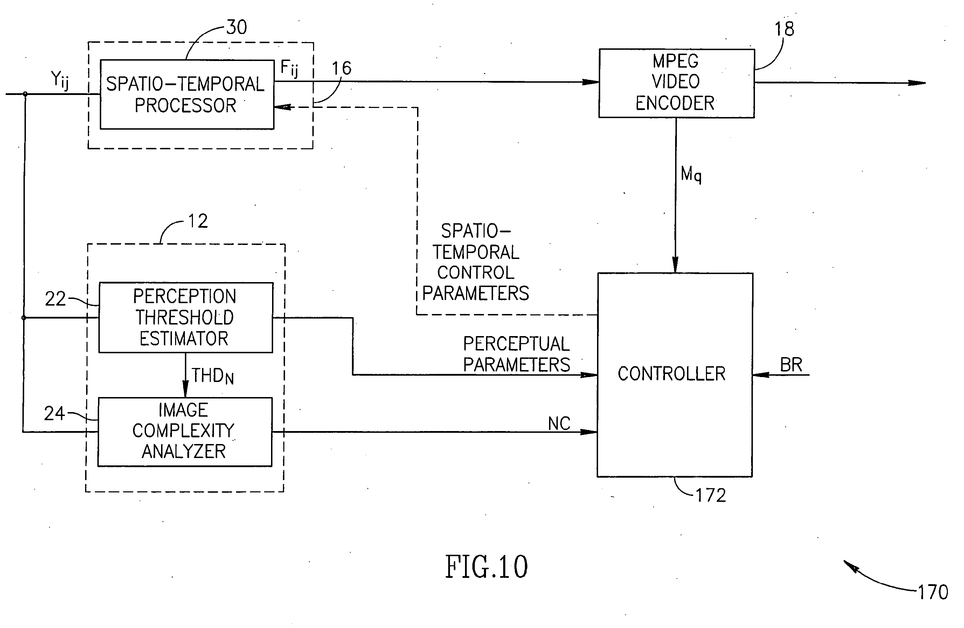

The present invention may be implemented in full, as shown with respect to Fig. 1, or partially, when resources may be limited. Fig. 10, to which reference is now made, illustrates one partial implementation. In this implementation, MPEG encoder 18 is a standard MPEG encoder 18 which does not provide any of its internal signals, except for the buffer fullness level Mq. Thus, the system 170 of Fig. 10 does not include decompressed distortion analyzer 20, entropy processor 32 or prediction processor 34. Instead, system 170 comprises spatio-temporal parameter processor 30, perception threshold estimator 22, image complexity analyzer 24 and a controller, here labeled 172.

Spatio-temporal processor 30, perception threshold estimator 22 and image complexity analyzer 24 operate as described hereinabove. However, controller 172 receives a reduced set of parameters and only produces the spatio-temporal control parameters. Its operation is as follows:

$$f_{N.1} = 3 * THD_N \qquad \qquad \text{Equation 18}$$

$$f_{NR(i,j)} = (1 - D_{i,j})NE_{i,j}\left(LE_{i,j} + ME_{i,j}\left[\frac{Mq_n}{M_{q0}}\right]_{\lim.1}\right) \qquad \text{Equation 19}$$

$$f_{N.2} = 3*\sigma \qquad \qquad \text{Equation 20}$$

$$f_{SH(i,j)} = D_{i,j}(1 - NE_{i,j})(LE_{i,j} + ME_{i,j})(1 - NC)\left[\frac{M_{q0}}{Mq_{n-1}}\right]_{\lim.2} \qquad \text{Equation 21}$$

$$f_{SD(i,j)} = (1 - D_{i,j})(1 - NE_{i,j})LE_{i,j}(1 - ME_{i,j})(1 - NC)\left[\frac{M_{q0}}{Mq_{n-1}}\right]_{\lim.2} \qquad \text{Equation 22}$$

**Third Embodiment**

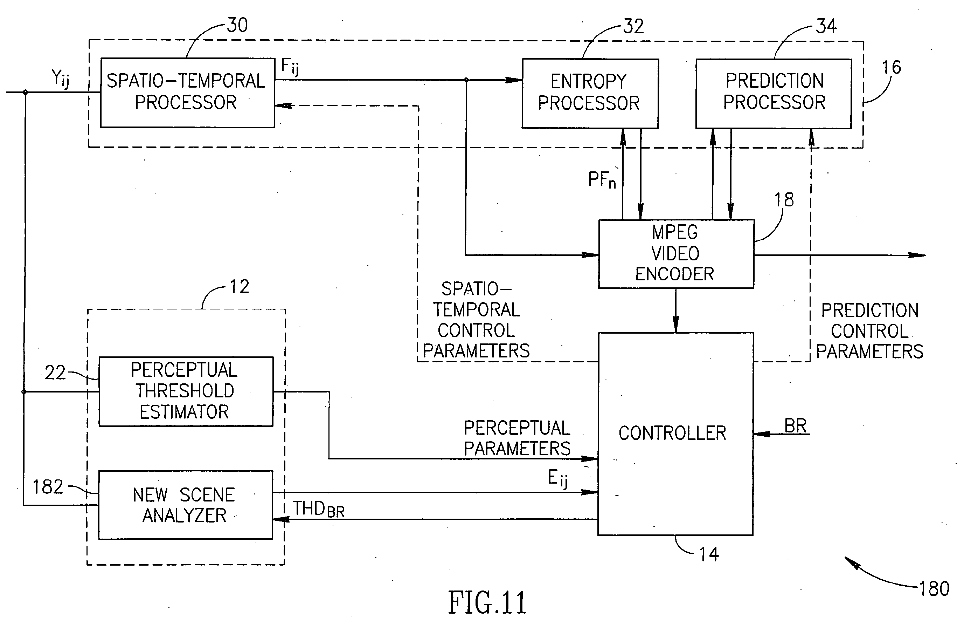

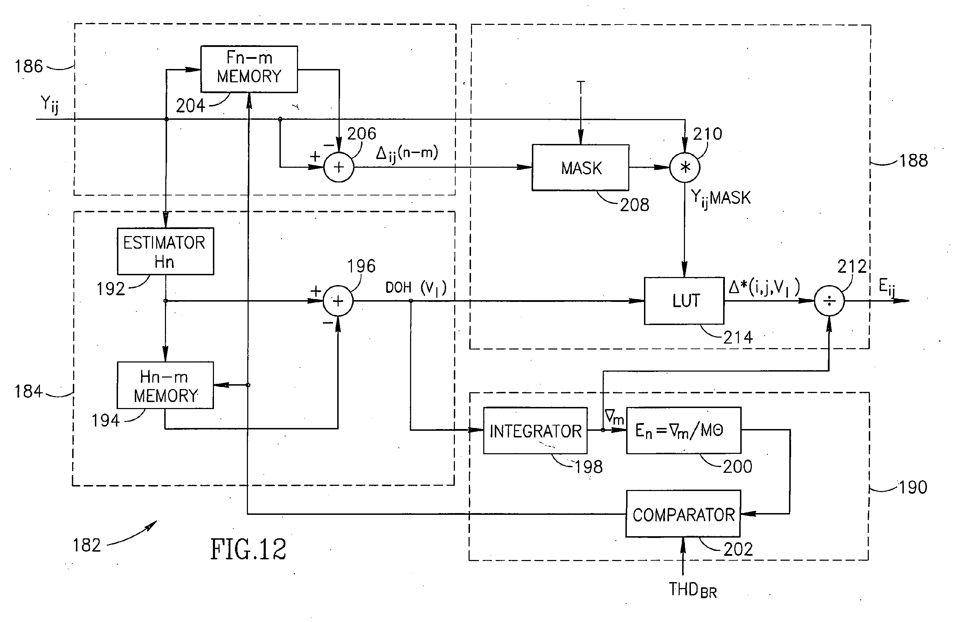

In another embodiment, shown in Figs. 11 and 12, to which reference is now made, decompressed distortion analyzer 20 and image complexity analyzer 24 are replaced by a new scene analyzer 182. The system, labeled 180, can include entropy processor 32 and prediction processor 34, or not, as desired.

As well known, MPEG compresses poorly when there is a significant scene change. Since MPEG cannot predict the scene change, the difference between the predicted image and the actual one is quite large and thus, MPEG generates many bits to describe the new image and thus, does not succeed in compressing the signal in any significant way.

In accordance with the third preferred embodiment of the present invention, the spatio-temporal control parameters and the prediction control parameters are also functions of whether or not the frame is a new scene. For MPEG compression, the term "new scene" means that a new frame has a lot of new objects in it.

New scene analyzer 182, shown in Fig. 12, comprises a histogram difference estimator 184, a frame difference generator 186, a scene change location identifier 188 and a new frame identifier 190. Histogram difference estimator 184 determines how different a histogram of the intensities $V_1$ of the current frame n is from that of the frame m where the current scene began. An image of the same scene generally has a very similar collection of intensities, even if the objects in the scene have moved around, while an image of a different scene will have a different histogram of intensities. Thus, histogram difference estimator 184 measures the extent of change in the histogram.

Using the output of frame difference generator 186 and of histogram difference estimator 184, scene change location identifier 188 determines whether or not a pixel (i,j) is part of a scene change or not. And, using the output of histogram difference estimator 184, new frame identifier 190 determines whether or not the current frame views a new scene.

Histogram difference generator 184 comprises a histogram estimator 192, a histogram storage unit 194 and an adder 196. Adder 196 generates a difference of histograms $DOH(V_1)$ signal by taking the difference between the histogram for the current frame n (from histogram estimator 192) and that of the previous frame m defined as a first frame of a new scene (as stored in histogram storage unit 194).

New frame identifier 190 comprises a volume of change integrator 198, scene change entropy determiner 200 and comparator 202. Integrator 198 integrates the difference of histogram $DOH(V_1)$ signal to determine the volume of change $\nabla_m$ between the current frame n and the previous frame m. Entropy determiner 200 generates a relative entropy value $E_n$ defining the amount of entropy between the two frames n and m and is a function of the volume of change $\nabla_m$ as follows:

$$E_n = \nabla_m / M_\Theta \qquad\qquad \text{Equation 23}$$

Comparator 202 compares relative entropy value $E_n$ to an entropy threshold level $THD_{BR}$, produced by controller 14, which is a function of the bit rate as follows:

$$THD_{BR} = 0.5 \frac{BR}{BR_{max}} \qquad\qquad \text{Equation 24}$$

where $BR_{max}$ is the bit rate for professional quality video compression. For example, $BR_{max} = 8Mbps$.

If relative entropy value $E_n$ is above entropy threshold $THD_{BR}$, then the frame is the first frame of a new scene. Comparator 202 then generates a command to a frame memory 204, forming part of frame difference generator 186, to store the current frame as first frame m and to histogram storage unit 194, to store the current histogram as first histogram m.

Frame difference generator 186 also comprises an adder 206, which subtracts first frame m from current frame n. The result is a difference frame $\Delta_{i,j} (n - m)$.

Scene change location identifier 188 comprises a mask generator 208, a multiplier 210, a divider 212 and a lookup table 214. Mask generator 208 generates a mask indicating where difference frame $\Delta_{i,j} (n - m)$ is smaller than threshold T, such as below a grey level of 2% of the maximum intensity level of video stream $Y_{i,j}$. In other words, the mask indicates where the current frame n is significantly different than the first frame m.

Multiplier 210 multiplies the incoming image $Y_{i,j}$ of current frame n by the mask output of generator 208, thereby identifying which pixels (i,j) of current frame n are new. Lookup table LUT 214 multiplies the masked frame by the difference of histogram $DOH(V_1)$, thereby emphasizing the portions of the masked frame which have changed significantly and deemphasizing those that have not. Divider 212 then normalizes the intensities by the volume of change $\nabla_m$ to generate the scene change location signal $E_{i,j}$.

Controller 14 of Fig. 11 utilizes the output of new scene analyzer 182 and that of perception threshold estimator 22 to generate the sharpness and prediction control parameters which attempt to match the visual perception control of the image with the extent to which MPEG encoder 18 is able to compress the data. In other words, in this embodiment, system 180 performs visual perception control when MPEG encoder 18 is working on the same scene and it does not bother with such a fine control of the image when the scene has changed but MPEG encoder 18 hasn't caught up to the change.

The spatio-temporal control parameters are generated as follows:

$$f_{N.1} = 3 * THD_N \qquad\qquad \text{Equation 25}$$

$$f_{NR(i,j)} = (1 - D_{i,j}) NE_{i,j} LE_{i,j} E_{i,j} \qquad\qquad \text{Equation 26}$$

$$f_{N.2} = 3 * \sigma \qquad\qquad \text{Equation 27}$$

$$f_{SH(i,j)} = D_{i,j} (1 - NE_{i,j})(1 - E_{i,j}) \qquad\qquad \text{Equation 28}$$

$$f_{SD(i,j)} = (1 - D_{i,j})(1 - NE_{i,j})(1 - E_{i,j}) \qquad\qquad \text{Equation 29}$$

The prediction control parameters are generated as follows:

$$M_{q0} = f(BR) \qquad \text{Equation 30}$$

$$f_{PL.1(i,j)} = K[E_{i,j}]_{\lim.1}\left[\frac{Mq_{n-1}}{M_{q0}}\right]_{\lim.2} \quad \text{Equation 31}$$

$$f_{PL..2(i,j)} = MK[E_{i,j}]_{\lim.1}\left[\frac{Mq_{n-1}}{M_{q0}}\right]_{\lim.2} \quad \text{Equation 32}$$

It will be appreciated that new scene analyzer 182 may be used in system 170 instead of image complexity analyzer 24. For this embodiment, only spatio-temporal control parameters need to be generated.

**Claims**

1. A processor which changes frames of a video stream according to how an MPEG (Motion Picture Expert Group) encoder will encode them so that the output of said MPEG encoder has a minimal number of bits but a human eye generally does not detect distortion of the image in said frame.

2. A processor according to claim 1 which comprises:

   an analysis unit which analyzes frames of a video stream for aspects of the images in said frames which affect the quality of compressed image output of said MPEG encoder;

   a controller which generates a set of processing parameters from the output of said analysis unit, from a bit rate of a communication channel and from a video buffer fullness parameter of said MPEG encoder; and

   a processor which processes said video stream according to said processing parameters.

3. A system according to claim 2 wherein said analysis unit comprises a perception threshold estimator which generates per-pixel perceptual parameters generally describing aspects in each frame that affect how the human eye sees the details of the image of said frame.

4. A system according to claim 3 and wherein said perception threshold estimator comprises:

   a detail dimension generator which generates an indication for each pixel (i,j) of the extent to which said pixel is part of a small detail of said image;

   a brightness indication generator which generates an indication for each pixel (i,j) of the comparative brightness level of said pixel as generally perceived by a human eye;

   a motion indication generator which generates an indication for each pixel (i,j) of the comparative motion level of said pixel;

   a noise level generator which generates an indication for each pixel (i,j) of the amount of noise thereat; and

a threshold generator which generates said perceptual thresholds from said indications.

5. A system according to claim 2 wherein said analysis unit comprises an image complexity analyzer which generates an indication of the extent of changes of said image compared to an image of a previous frame.

6. A system according to claim 2 wherein said analysis unit comprises a new scene analyzer which generates an indication of the presence of a new scene in the image of a frame.

7. A system according to claim 6 and wherein said new scene analyzer comprises:

a histogram difference estimator which determines how different a histogram of the intensities of a current frame n is from that of a previous frame m where the current scene began;

a frame difference generator which generates a difference frame from current frame n and previous frame m;

a scene change location identifier receiving the output of histogram difference estimator and frame difference generator which determines whether or not a pixel is part of a scene change;

a new scene identifier which determines, from the output of said histogram difference estimator, whether or not the current frame views a new scene; and

an updater which sets current frame n to be a new previous frame m if current frame n views a new scene.

8. A system according to claim 6 and wherein said new scene analyzer comprises a histogrambased unit which determines the amount of information at each pixel and a new scene determiner which determines the presence of a new scene from said amount of information and from a bit rate.

9. A system according to claim 2 wherein said analysis unit comprises a decompressed image distortion analyzer which determines the amount of distortion in a decompressed version of the current frame, said analyzer receiving an anchor frame from said MPEG encoder.

10. A system according to claim 3 and wherein said processor comprises a spatio-temporal processor which comprises:

a noise reducer which generally reduces noise from texture components of said image using a noise level parameter from said controller;

an image sharpener which generally sharpens high contrast components of said image using a per-pixel sharpening parameter from said controller generally based on the state of said MPEG encoder; and

a spatial depth improver which multiplies the intensity of texture components of said image using a parameter based on the state of said MPEG encoder.

11. A system according to claim 3 and wherein said processor comprises an entropy processor which generates a new signal to a video data input of an I, P/B switch of said MPEG encoder,
wherein said signal emphasizes information in said image which is not present at least in a prediction frame produced by said MPEG encoder.

12. A system according to claim 3 and wherein said processor comprises a prediction processor which generally minimizes changes in small details or low contrast elements of a frame to be provided to a discrete cosine transform (DCT) unit of said MPEG encoder using a per-pixel parameter from said controller.

13. A system according to claim 10 and wherein said noise reducer comprises:

a selector which separates texture components from said image, producing thereby texture components and non-texture components;

a filter which generally reduces noise from said texture components; and

an adder which adds said reduced noise texture components to said non-texture components.

**14.** A system according to claim 10 and wherein said image sharpener comprises:

a selector which separates high contrast components from said image, producing thereby high contrast components and low contrast components;

a sharpener which generally sharpens said high contrast components using a per-pixel sharpening parameter generally based on the state of an MPEG encoder; and

an adder which adds said sharpened high contrast components to said low contrast components.

**15.** A system according to claim 10 and wherein said spatial depth improver comprises:

a selector which separates texture components from said image, producing thereby texture components and non-texture components;

a multiplier which multiplies the intensity of said texture components using a parameter based on the state of an MPEG encoder; and

an adder which adds said multiplied texture components to said non-texture components.

**16.** A method comprising:

changing frames of a video stream according to how an MPEG encoder will encode them so that the output of said MPEG encoder has a minimal number of bits but a human eye generally does not detect distortion of the image in said frame.

**17.** A method according to claim 16 wherein said step of changing comprises:

analyzing frames of a video stream for aspects of the images in said frames which affect the quality of compressed image output of said MPEG encoder;

generating a set of processing parameters from the output of said step of analyzing, from a bit rate of a communication channel and from a video buffer fullness parameter of said MPEG encoder; and

processing said video stream according to said processing parameters.

**18.** A method according to claim 17 wherein said step of analyzing comprises generating per-pixel perceptual parameters generally describing aspects in each frame that affect how the human eye sees the details of the image of said frame.

**19.** A method according to claim 18 and wherein said step of generating parameters comprises:

generating an indication for each pixel (i,j) of the extent to which said pixel is part of a small detail of said image;

generating an indication for each pixel (i,j) of the comparative brightness level of said pixel as generally perceived by a human eye;

generating an indication for each pixel (i,j) of the comparative motion level of said pixel;

generating an indication for each pixel (i,j) of the amount of noise threat; and

generating said perceptual thresholds from said indications.

**20.** A method according to claim 17 wherein said step of analyzing comprises generating an indication of the extent of changes of said image compared to an image of a previous frame.

21. A method according to claim 17 wherein said step of analyzing comprises generating an indication of the presence of a new scene in the image of a frame.

22. A method according to claim 21 and wherein said step of generating an indication comprises:

   determining how different a histogram of the intensities of a current frame n is from that of a previous frame m where the current scene began;

   generating a difference frame from current frame n and previous frame m;

   determining whether or not a pixel is part of a scene change using output of r said previous steps of determining and generating;

   determining, from the output of said histogram difference estimator, whether or not the current frame views a new scene; and

   setting current frame n to be a new previous frame m if current frame n views a new scene.

23. A method according to claim 21 and wherein said step of generating an indication comprises determining the amount of information at each pixel and determining the presence of a new scene from said amount of information and from a bit rate.

24. A method according to claim 16 wherein said step of analyzing comprises determining the amount of distortion in a decompressed version of the current frame utilizing at least an anchor frame from said MPEG encoder.

25. A method according to claim 17 and wherein said step of processing comprises:

   generally reducing noise from texture components of said image using a noise level parameter;

   generally sharpening high contrast components of said image using a per-pixel sharpening parameter generally based on the state of said MPEG encoder; and

   multiplying the intensity of texture components of said image using a parameter based on the state of said MPEG encoder.

26. A method according to claim 17 and wherein said step of processing comprises generating a new signal to a I, P/B switch of said MPEG encoder, wherein said signal emphasizes information in said image which is not present at least in a prediction frame produced by said MPEG encoder.

27. A method according to claim 17 and wherein said step of processing comprises generally minimizing changes in small details or low contrast elements of a frame to be provided to a discrete cosine transform (DCT) unit of said MPEG encoder using a per-pixel parameter from said controller.

28. A method according to claim 25 and wherein said step of generally reducing noise comprises:

   separating texture components from said image, producing thereby texture components and non-texture components;

   reducing noise from said texture components; and

   adding said reduced noise texture components to said non-texture components.

29. A method according to claim 25 and wherein said step of generally sharpening comprises:

   separating high contrast components from said image, producing thereby high contrast components and low contrast components;

   generally sharpening said high contrast components using a per-pixel sharpening parameter generally based

**EP 1 437 896 A2**

on the state of an MPEG encoder; and

adding said sharpened high contrast components to said low contrast components.

30. A method according to claim 25 and wherein said step of multiplying comprises:

separating texture components from said image, producing thereby texture components and non-texture components;

multiplying the intensity of said texture components using a parameter based on the state of an MPEG encoder; and

adding said multiplied texture components to said non-texture components.

16

FIG.1

FIG.2
PRIOR ART

FIG.3A

FIG.3B

FIG.3C

FIG.4A

FIG.4B

FIG.5A

FIG.5B

$Y_{ij}$ → | NOISE REDUCER | —90— $A_{ij}$ → | IMAGE SHARPENER | —92— $B_{ij}$ → (+) —95— $F_{ij}$ →

| SPATIAL DEPTH IMPROVER | —93— $C_{i,j}$

FIG.6

FIG.7A

FIG.7B

FIG.7C

FIG.8

EP 1 437 896 A2

$f_{PL.1_{ij}}$

$\nabla_n$ ——→ MULTIPLIER ——→ $\nabla_n^*$

FIG.9A

$f_{PL.2_{ij}}$

160

$\nabla_n$ → 2D HPF → MULTIPLIER 162 → ⊕ 166 → $\nabla_n^*$

164

2D LPF

FIG.9B

FIG.10

EP 1 437 896 A2

FIG.11

EP 1 437 896 A2

FIG.12

EP 1 437 896 A2